# EUROPÄISCHE PATENTSCHRIFT

(11) **EP 0 570 913 B1**
(45) Veröffentlichungstag und Bekanntmachung des Hinweises auf die Patenterteilung: **12.03.1997**
(21) Anmeldenummer: 93108094.9
(22) Anmeldetag: 18.05.1993
(51) Int. Cl.: G07F 7/00, G07F 17/12, A47F 9/04

(54) **System zum Verkauf von Waren**
Product sales system
Système pour la vente d'articles

(30) Priorität: 22.05.1992 DE 4217045
(43) Veröffentlichungstag der Anmeldung: 24.11.1993
(73) Patentinhaber: ACCUMULATA-VERWALTUNGS GMBH, D-80639 München (DE)
(72) Erfinder: Schlamp, Hans, 80639 München (DE)
(74) Vertreter: von Puttkamer, Nikolaus, Dipl.-Ing. Patentanwälte Haft, von Puttkamer Berngruber, Czybulka

(56) Entgegenhaltungen:
- EP-A- 0 359 667
- EP-A- 0 396 139
- FR-A- 2 343 521
- GB-A- 2 202 664
- LU-A- 84 531
- US-A- 1 625 490
- US-A- 2 888 197
- US-A- 3 023 851
- US-A- 4 073 368
- US-A- 5 186 281
- IBM TECHNICAL DISCLOSURE BULLETIN, vol.17, no.9, February 1975, ARMONK, NEW YORK, USA page 2605 C.P.AUGUST 'Automated Retailing System.'

## Beschreibung

Die Erfindung betrifft ein System zum Verkauf und zur Auslieferung von Waren.

Üblicherweise werden Waren in Verkaufsläden oder dergleichen zum Verkauf bereitgehalten, vom Käufer ausgewählt und gegen Bezahlung an diesen abgegeben. Dies bedeutet, daß sämtliche zum Verkauf gedachte Waren gelagert und in teuer ausgestatteten Läden bereitgestellt werden müssen. Da Lager- und Verkaufsräume jedoch sehr knapp und teuer sind, stellt dies wegen des erforderlichen großen Lagerraumes für Waren ein Problem dar. Ein weiteres Problem bekannter Verkaufsläden besteht darin, daß sie es erforderlich machen, daß ein Käufer sich selbst zum Ort des Ladens begibt, um die von ihm gewünschten Waren auszuwählen und zu erwerben. Dies bedeutet, daß die Käufer mit ihren Kraftfahrzeugen zu den Verkaufsläden fahren, um die erworbenen Waren transportieren zu können. Verstopfungen der Innenstädte, insbesondere an bestimmten Verkaufstagen (in Deutschland z.B. Donnerstag Abend, verkaufsoffener Samstag) sind die Folge.

Warenausgabestationen in Form von Schließfachanlagen mit der Möglichkeit einer Fernbestellung von Waren sind z.B. aus EP-A-0 359 667, FR-A-2 343 521 oder EP-A-0 396 139 bekannt. Musterläden sind z.B. aus dem Versandhandel oder aus der Möbelbranche bekannt.

Die Aufgabe der vorliegenden Erfindung besteht daher darin, ein System zum Verkauf von Waren anzugeben, durch das es vermieden wird, daß Käufer zum Erwerb von Waren mit ihren Kraftfahrzeugen in die Innenstädte fahren müssen.

Diese Aufgabe wird durch ein System der eingangs genannten Art gelöst, das die im Patentanspruch 1 angegebenen Merkmale aufweist.

Bei der vorliegenden Erfindung können die Käufer zum Erwerb von Waren ohne ihre Kraftfahrzeuge, d.h. unter Benutzung von öffentlichen Verkehrsmitteln, in die Innenstädte fahren, weil in Muterläden nur Unikate oder Bilder von Waren präsentiert werden und der Käufer die von ihm gewünschten Waren in den eigentlichen Warenlagern an der Peripherie der Städte, z.B. in speziellen Park- und Ridecentern, abholen kann.

Besonders vorteilhaft erhält ein Kunde in einem Musterladen der Innenstadt eine Scannereinrichtung oder dergleichen, mit der er von Regal zu Regal geht, um aus den angebotenen Waren bzw. Bildern dieser Waren auszuwählen. Wenn er sich zum Kauf einer Ware entschließt, tastet er mit der Scannereinrichtung den auf der Musterware bzw. dem Bild oder den im Bereich der Ware am Regal angeordneten Strichcode ab und tippt die von ihm gewünschte Stückzahl in die Tastatur der Scannereinrichtung ein. Nach erfolgter Auswahl liefert er die Scannereinrichtung an der Kasse ab und bezahlt den Betrag seines Einkaufes, der sich durch die in der Scannereinrichtung gespeicherten Daten ergibt. Der Kunde erhält dann eine Abholkarte, mit der er in äußerst einfacher und praktischer Weise nach dem Verlassen der Innenstadt mit einem öffentlichen Verkehrsmittel an der Peripherie der Stadt in einer Warenausgabestation seine Ware erhält und in das dort abgestellte Kraftfahrzeug einladen kann. Die Warenausgabestation enthält Lagerhallen, in denen beispielsweise in Hochregalen oder dergleichen die im Musterladen angebotenen Waren enthalten sind. Die Warenausgabestation steht mit dem Musterladen, beispielsweise über das öffentliche Telefonnetz, on-line in Verbindung, so daß vom Musterladen der Warenausgabestation mitgeteilt werden kann, welche Waren für einen Kunden bereitgestellt werden müssen. Das Personal der Warenausgabestation entnimmt diese Waren dem Lager und stellt sie in speziellen Ausgabeeinrichtungen zur Abholung bereit. Diese Ausgabeeinrichtungen sind vorteilhafterweise so gestaltet, daß der Kunde nach Eingabe seiner Abholkarte in ein Lesegerät die von ihm gewünschten Waren automatisch an einer oder an mehreren Ausgabeöffnungen entnehmen kann. Besonders vorteilhaft ist es, daß die an der Peripherie befindlichen Lager infolge der dort geringeren Quadratmeterpreise billiger sind als entsprechende Lager in der Innenstadt. Zudem können die Waren in diesen Lagerhallen ohne aufwendige Dekorationen bereitgehalten werden.

Weitere vorteilhafte Ausgestaltungen der Erfindung gehen aus Unteransprüchen hervor.

Im folgenden werden die Erfindung und deren Ausgestaltungen im Zusammenhang mit den Figuren näher erläutert. Es zeigen:
- Fig. 1: eine schematische Darstellung zur Erläuterung des erfindungsgemäßen Systems und
- Fig. 2 und 3: Weiterbildungen der Erfindung.

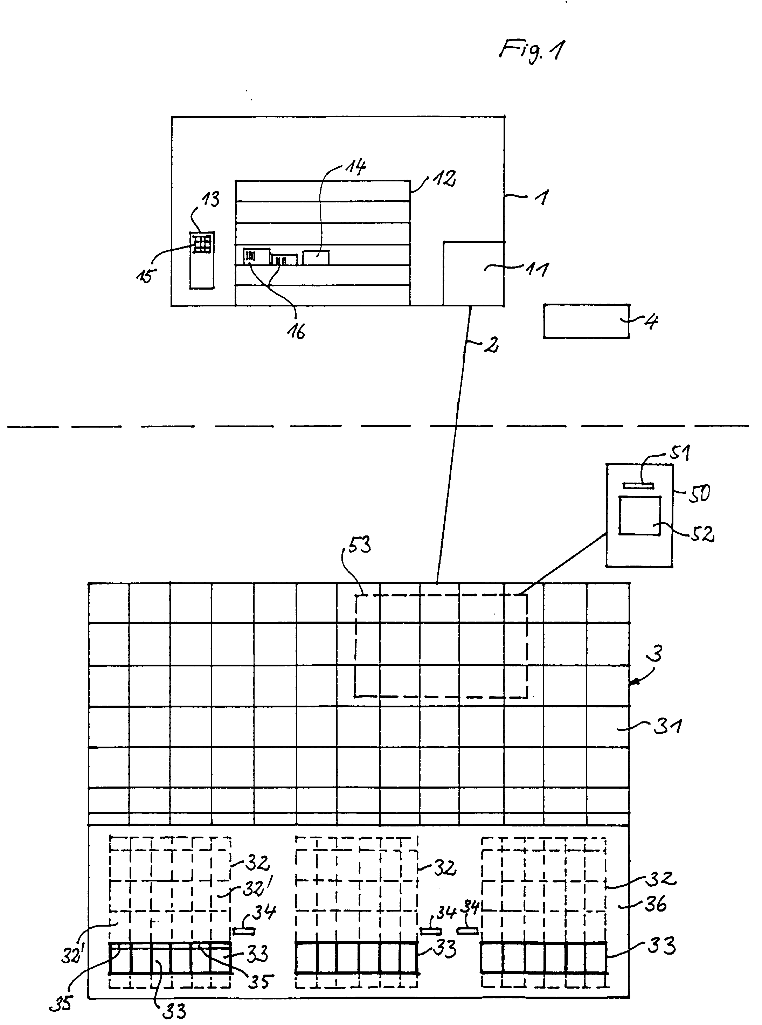

In der Figur 1 ist ein im Bereich einer Innenstadt befindliche Verkaufseinrichtung in der Form eines Musterladens oder dergleichen mit 1 bezeichnet. An der Peripherie, d.h. also außerhalb der Innenstadt, beispielsweise im Bereich einer Park- and Rideeinrichtung befindet sich eine Warenausgabestation 3. Die Warenausgabestation 3 bzw. deren tralcomputer 53 ist on-line, vorzugsweise über eine Telefonleitung 2, mit dem Musterladen 1 verbunden.

Im Musterladen 1 werden, beispielsweise in Regalen 12 oder dergleichen Unikate von Waren bzw. Bilder und/oder Beschreibungen dieser Waren als Ansichtsexemplare 14 angeboten. Beim Betreten des Musterladens 1 erhält ein Käufer eine Scannereinrichtung 13 mit einer Tastatur 15 und einem Speicher. Mit dieser Scannereinrichtung 13 begibt sich der Käufer an das Regal 12, um von ihm gewünschte Waren nach Betrachten der diesen Waren entsprechenden Ansichtsexemplare 14 auszuwählen. Wenn ein Käufer eine bestimmte Ware erwerben möchte, tastet er mit der Scanneinrichtung 13 den Strichcode 16 des entsprechenden Ansichtsexemplares 14 ab und tastet er in die Tastatur 15 der Scannereinrichtung 13 die von ihm zum Erwerb gewünschte Stückzahl ein. Diese Informationen werden in dem Speicher der Sannereinrichtung 13 gespeichert. Wenn ein Käufer auf diese Weise den Strichcode 16 einer oder mehrerer Ansichtsexemplare 14 mit seiner Scannereinrichtung 13 abgetastet hat und die Anzahl der von ihm gewünschten Waren über die Tastatur 15 jeweils eingegeben hat, begibt er sich zur Kasse 11 des Musterladens 1. Es werden hier oder wurden zuvor bereits in einem Rechner der Scannereinrichtung 13 aufgrund der Strichcodeinformationen und der eingegebenen Stückzahlen die Kaufpreise ermittelt bzw. wurden die in der Scannereinrichtung gespeicherten, vom Kunden eingegebenen Daten ausgelesen und daraus eine Rechnung erstellt bzw. ausgedruckt. Nach Bezahlung mit Bargeld oder Scheck usw. erhält der Käufer an der Kasse 11 eine Abholkarte 4 in der Form eines Datenträgers, bei dem es sich beispielsweise um ein Strichcodekärtchen oder um eine Magnetkarte handeln kann. Mit der Hilfe dieser Abholkarte 4 kann sich der Käufer später an der Warenausgabestation 3 zur Abholung der von ihm gewünschten Waren tifizieren.

Wenn ein Käufer die von ihm im Musterladen 1 erworbenen Waren abholen möchte, begibt er sich, nachdem er die Innenstadt z.B. mit einem öffentlichen Verkehrsmittel verlassen hat, zu der Warenausgabestation 3, der mittlerweile vom Musterladen 1 über die Telefonleitung 2 mitgeteilt wurde, welche Waren für den durch die Abholkarte 4 identifizierbaren Käufer in der Warenausgabestation 3 bereitgehalten werden müssen.

Die Warenausgabestation 3 enthält in einer beliebig gestalteten Lagereinrichtung 31, die beispielsweise die Form von Hochregalen, paternosterartigen Regalsystemen oder dergleichen aufweisen kann, sämtliche den Ansichtsexemplaren 14 des Musterladens 1 entsprechende Waren jeweils in größeren Stückzahlen. Das Personal in der Warenausgabestation 3 kann nun, nachdem ihm über die Telefonleitung 2 die einer Abholkarte 4 zugeordneten Informationen übermittelt wurden, aus der Lagereinrichtung 31 die von dem einer bestimmten Abholkarte 4 zugeordneten Käufer gewünschten Waren entnehmen und zusammenstellen und in eine Warenausgabeeinrichtung 32 eingeben. Beispielsweise handelt es sich bei einer derartigen Warenausgabeeinrichtung 32 um ein paternosterartiges Regalsystem, das an einem endlos, z.B. in vertikaler Richtung, verfahrbaren Förderband reihen- und spaltenartig angeordnete Fächer 32' aufweist. Von dem genannten Personal werden die zusammengestellten Waren in ein Fach 32' der Warenausgabeeinrichtung renausgabeeinrichtung 32 eingegeben. Jedes Facher der 32 ist hinter eine Warenausgabeöffnung 33 verfahrbar. Bei der Bestückung eines Faches 32' mit den gewünschten Waren gibt das Personal der Warenausgabestation 3 in einen nicht näher dargestellten Rechner eine den jeweiligen Käufer identifizierende Information ein, die sich auch auf der Abholkarte 4 befindet und über die Telefonleitung 2 mitgeteilt wurde.

Nach Eingabe seiner Abholkarte 4 in ein der Warenausgabeeinrichtung 32 zugeordnetes Lesegerät 34 wird dem Käufer an einer Anzeigeeinrichtung 35, z.B. einer blinkenden Anzeigelampe angezeigt, hinter welche Entnahmeöffnung 33 das für ihn belegte Fach 32' verfahren wird. Diesem Fach kann der Käufer dann beispielsweise nach Öffnung einer entsprechenden, das Fach normalerweise verschließenden Klappe oder dergleichen, die für ihn zusammengestellten Waren entnehmen. Vorzugsweise sind Warenausgabeeinrichtungen 32 in einer Wand 36 der Warenausgabestation 3 so angeordnet, daß ein Käufer mit seinem Kraftfahrzeug in unmittelbare Nähe der Ausgabeöffnungen 33 fahren und die Waren daher direkt in sein Kraftfahrzeug übernehmen kann.

Es ist jedoch auch denkbar, daß im Bereich der Warenausgabestation 3 Einkaufs- bzw. Transportwagen bereitgehalten werden, mit denen die gewünschten Waren an den Ausgabeöffnungen 33 abgeholt werden können und zu den entsprechenden Kraftfahrzeug-Abstellplätzen eines Parkplatzes transportiert werden können.

Vorzugsweise ist der Warenausgabestation 3 ein Vorinformationsterminal 50 mit einem Lesegerät 51 für die Abholkarte 4 und einer Anzeigeneinrichtung 52, vorzugsweise in der Form eines Bildschirmes zugeordnet. Das Terminal 50 befindet sich z.B. am Ausgang des öffentlichen Verkehrsmittels und/oder an dem Eingang zum Parkplatz. Nach Eingabe der Abholkarte 4 wird dem Kunden am Bildschirm 52 angezeigt, zu welchem Bereich der Warenausgabestation 3, die z.B. wenigstens in einen Lebensmittelbereich und einen Nonfood-Bereich unterteilt ist, der Kunde sich zum Erhalt seiner Waren begeben muß. Zum Erhalt der erforderlichen Informationen ist das Terminal mit dem Zentralcomputer 53 der Warenausgabestation verbunden, der seinerseits mit der Leitung 2 in Verbindung steht.

Es wird darauf hingewiesen, daß anstelle der beschriebenen paternosterartigen Regaleinrichtung 32 als Warenausgabeeinrichtungen 32 sämtliche Einrichtungen denkbar sind, bei denen Waren aus den bestückten Fächern 32 entnommen und zu wenigstens einer Ausgabeöffnung 33 transportiert werden können. Dies bedeutet, daß als Warenausgabeeinrichtungen auch hochregalartige Systeme denkbar sind, aus deren Fächern die Waren mit der Hilfe von roboterartigen Einrichtungen entnommen und zu den Ausgabeöffnungen 33 transportiert werden können. Bei den roboterartigen Einrichtungen handelt es sich beispielsweise um Greifersysteme, die zu den einzelnen Fächern der Warenausgabeinrichtung 32 und zu der bzw. den Ausgabeöffnungen 33, beispielsweise durch Bewegungsoperationen in vertikaler und horizontaler Richtung bewegbar sind.

Die Warenausgabestation 31 kann zweckmäßigerweise in einen Bereich mit gekühlten Fächern und einen Bereich mit ungekühlten Fächern unterteilt sein.

Im folgenden werden besondere Ausgestaltungen der Erfindung näher erläutert.

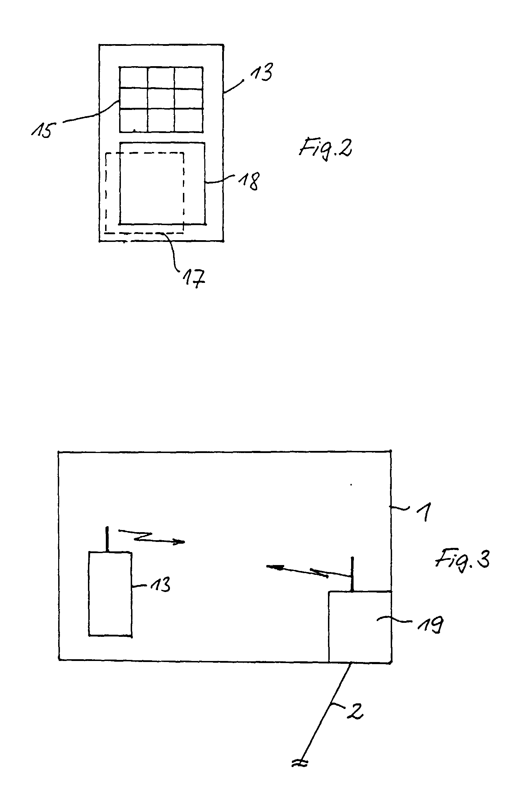

Um einem Kunden im Musterladen 1 anzeigen zu können, ob den jeweiligen Ansichtsexemplaren 14 entsprechende Waren in den Lagereinrichtungen 31 der Warenausgabestation 3 tatsächlich vorhanden sind, kann die Strichcodeeinrichtung 13 eine Speichereinrichtung 17 aufweisen, in die vor der Ausgabe an den Kunden im Bereich der Kasse 11 den tatsächlichen Warenbestand betreffende Informationen und die aktuellen Warenpreise eingegeben werden. Es kann dann dem Kunden beim Gebrauch der Scannereinrichtung 13 nach Abtastung eines Strichcodes 16 eines Ansichtsexemplares 14 beispielsweise an einer alphanumerischen Anzeigeeinrichtung bzw. einem Display 18 (Figur 2) sofort mitgeteilt werden, ob die entsprechenden Waren in den gewünschten Stückzahlen vorhanden sind oder nicht und was sie kosten.

Ein vorteilhafter Nebeneffekt ist es dabei, daß ein Kunde den Preis jeder Ware an seiner Scannereinrichtung ablesen kann, so daß die zeit- und kostenaufwendige Auspreisung der Waren entfallen kann.

Um relativ sicherzustellen, daß den Ansichtsexemplaren 14 entsprechende Waren vorhanden sind, ist es auch denkbar, den tatsächlichen Warenbestand der Warenausgabestation 3 nach Gesichtspunkten der Wahrscheinlichkeit zu gestalten und einem Käufer gegebenenfalls an der Kasse 11 aufgrund von über die Telefonleitung 2 erhaltenen Nachfrageinformationen gegebenenfalls mitzuteilen, daß bestimmte Waren derzeit nicht erhältlich sind.

Bevorzugt ist gemäß Figur 3 im Musterladen 1 ein zentraler Rechner 19 an der Kasse vorhanden, der jederzeit Informationen über den tatsächlichen Warenbestand in der Warenausgabestation 3 über die Telefonleitung 2 erhält. Mit diesem Rechner 19 ist es dann möglich, bei der Erstellung der Abrechnung für den Kunden, dessen Kaufwünsche mit dem tatsächlichen Warenbestand abzustimmen und bei einem Fehlbestand einer Ware den Kunden an der Kasse oder bereits zuvor am Display 18 entsprechend informieren zu können. Die im Musterladen 1 vorgenommenen Abbuchungen werden dem Zentralcomputer mitgeteilt. Jede Scanneinrichtung 13 im Musterladen 1 ist drahtlos mit dem Rechner 19 (z.B. Funk- oder Infrarotverbindung) verbunden, so daß jeder Kunde "on-line" bei der Betätigung seiner Scannereinrichtung 13 von diesem Bestand abbuchen kann. Auf diese Weise wird der im zentralen Rechner 19 gespeicherte Bestand fortlaufend aktualisiert. Für den Kunden wird daher ein nicht vorhandener oder für seinen Kaufwunsch nicht ausreichender Bestand erkennbar. Der Rechner 19 teilt die Abbuchungen dem Zentralcomputer 53 fortlaufend über die Leitung 2 mit.

Bei einer weiteren Ausgestaltung der Erfindung wird die Strichcodeeinrichtung 13 durch eine Einrichtung mit einem Spracherkennungscomputer ersetzt, die etwa nach Art eines Diktiergerätes vom Kunden bei der Auswahl fortlaufend besprochen wird. Der Computer setzt die aufgenommenen Sprache in computerlesbare Daten um und speichert diese entsprechend, so daß die Auswertung an der Kasse 11 in der bereits beschriebenen Weise erfolgen kann.

Bevorzugt wird die Stromversorgung der vom Kunden mitgeführten Einrichtung 13 über eine in dieser Einrichtung vorgesehene Solarbatterie erreicht, die im Musterladen 1 über die Beleuchtung fortlaufend nachgeladen wird.

Anstelle der Tastatur 15 kann die Scannereinrichtung 13 auch einen sogenannten Notebook-Computer aufweisen, bei dem der Kunde seine Stückzahlwünsche über einen elektronischen Schreibgriffel auf einer sensitiven Fläche eingibt.

Wenn die Scannereinrichtungen 13 mit dem zuvor beschriebenen Rechner 19 in Verbindung stehen, ist es auch möglich, die Art und Stückzahl der vom Kunden ausgewählten Waren nicht in der Scannereinrichtung 13 zu speichern, sondern fortlaufend an den Rechner 19 zu übertragen. Dieser erfaßt dann fortlaufend die von allen Scannereinrichtungen 13 an ihn übertragenen Daten und wertet diese zum Ausdruck von Rechnungen aus, die dann für den Kunden nach Abschluß des "Kaufvorganges" an der Kasse unmittelbar zur Verfügung stehen. Ein Schlangestehen an der Kasse ist daher nicht erforderlich. Der Musterladen 1 kann mit nur einer Person betrieben werden, so daß sich Personalkosten einsparen lassen.

## Patentansprüche

1. Verkaufssystem zum Verkauf und zur Auslieferung von Waren, mit den folgenden Merkmalen:
a) An einem ersten Ort befindet sich ein Musterladen (1).
b) An einem zweiten Ort, der vom ersten Ort entfernt ist, befindet sich eine Warenausgabestation (3), mit der der Musterladen (1) über eine Leitung (2) zum Datenaustausch verbunden ist.
c) Der Musterladen (1) enthält Unikate von Waren, Bilder und/oder Beschreibungen dieser Waren als Ansichtsexemplare (14), wobei den Ansichtsexemplaren (14) abfragbare Informationen (16) zugeordnet sind.
d) Der Musterladen (1) enthält für jeden Kunden eine Abfrageinrichtung (13) mit einer Eingabeeinrichtung (15).
e) Nach Auswahl eines Ansichtsexemplares (14) fragt der Kunde mit der Abfrageinrichtung (13) die dem Ansichtsexemplar (14) entsprechenden Informationen (16) ab und gibt an der Eingabeeinrichtung (15) die gewünschte Stückzahl der dem Ansichtsexemplar (14) entsprechenden Waren ein.
f) An einer im Musterladen angeordneten Kasseneinrichtung (11) wird dem Kunden aufgrund der von der Abfrageeinrichtung (13) übermittelten Informationen automatisch eine Rechnung erstellt.
g) Nach Begleichung der Rechnung und Ausgabe einer Abholkarte (4) von der Kasseneinrichtung (11) werden an einem Zentralcomputer (53) der Warenausgabestation (3) über die Leitung (2) die die gewünschten Waren und deren Stückzahlen betreffenden Informationen zusammen mit einer den Kunden identifizierenden Information, die sich auch auf der Abholkarte (4) befindet, übermittelt.
h) Die Warenausgabestation (3) enthält in einer Lagereinrichtung (31) den Ansichtsexemplaren (14) entsprechende Waren in größeren Stückzahlen.
i) Aufgrund der der Warenausgabestation (3) mitgeteilten Informationen werden die vom Kunden gewünschten Waren der Lagereinrichtung (31) entnommen und in eine Warenausgabeeinrichtung (32) eingegeben.
k) Durch eine Anzeigeeinrichtung (35,52) wird nach Eingabe der Abholkarte durch den Kunden in ein Lesegerät (34) der Warenausgabeeinrichtung (32) eine Entnahmevorrichtung (33) zur Entnahme der gewünschten Waren angezeigt.

2. System nach Anspruch 1, dadurch gekennzeichnet, daß die abfragbaren Informationen die Form von an den Ansichtsexemplaren (14) oder an einer diesen zugeordneten Stelle angeordneten Strichcodes (16) aufweisen.

3. System nach Anspruch 2, dadurch gekennzeichnet, daß die Abfrageeinrichtung eine Scannereinrichtung (13) ist.

4. System nach einem der Ansprüche 1 bis 3, dadurch gekennzeichnet, daß die Eingabeeinrichtung eine Tastatur (5) oder ein Notebook-Computer ist.

5. System nach einem der Ansprüche 1 bis 4, dadurch gekennzeichnet, daß die Abholkarte (4) eine Strichcode- oder Magnetkarte ist.

6. System nach einem der Ansprüche 1 bis 5, dadurch gekennzeichnet, daß die Lagereinrichtung (31) die Form von hochregalartigen oder paternosterartigen Regalsystemen aufweist.

7. System nach einem der Ansprüche 1 bis 6, dadurch gekennzeichnet, daß die Warenausgabeeinrichtung (32) Fächer (32') zur Aufnahme der gewünschten Waren aufweist, die zu einer Entnahmevorrichtung (33) verfahrbar sind.

8. System nach Anspruch 7, dadurch gekennzeichnet, daß die Warenausgabeeinrichtung (32) eine paternosterartige Einrichtung ist, deren reihen- und spaltenartig angeordneten Fächer (32') zur Entnahmevorrichtung (33) verfahrbar sind, die entsprechend den in einer Reihe angeordneten Fächern Ausgabeöffnungen (33) aufweist.

9. System nach Anspruch 8, dadurch gekennzeichnet, daß die Ausgabeöffnungen durch öffenbare Klappen verschließbar sind.

10. System nach einem der Ansprüche 1 bis 9, dadurch gekennzeichnet, daß die Warenausgabestation (31) wenigstens ein Informationsterminal (50) mit einem Lesegerät (51) für die Abholkarte (4) und einer Anzeigeeinrichtung (52) aufweist, das mit dem Zentralcomputer (53) verbunden ist und an der Anzeigeeinrichtung (52) wenigstens einen bestimmten Bereich der Warenausgabeeinrichtung (33) anzeigt, an dem die Warenausgabe erfolgt.

11. System nach einem der Ansprüche 1 bis 10, dadurch gekennzeichnet, daß im Musterladen (1) ein über die Leitung (2) mit dem Zentralcomputer (53) in Verbindung stehender Rechner (19) vorgesehen ist, dem vom Zentralcomputer (53) fortlaufend Informationen über den tatsächlich vorhandenen Warenbestand mitgeteilt werden, daß jede Abtasteinrichtung frageinrichtung (13) mit dem Rechner (19) drahtlos in Verbindung steht, so daß der Kunde von der Abfrageinrichtung aus vom tatsächlichen Warenbestand abbuchen kann.

## Claims

1. A sales system for the sale and delivery of goods, having the following features:
a) A sample shop (1) is located at a first site.
b) A goods dispensing station (3), with which the sample shop (1) is connected via a line (2) for the exchange of data, is located at a second site, which is distant from the first site.
c) The sample shop (1) contains single items of goods, pictures and/or descriptions of these goods as display samples (14), with requestable information (16) being associated with the display samples (14).
d) The sample shop (1) contains a enquiry device (13) with an input device (15) for each customer.
e) After selecting a display sample (14), with the enquiry device (13) the customer requests the information (16) corresponding to the display sample (14) and enters on the input device (15) the desired piece number of the goods corresponding to the display samples (14).
f) An invoice is automatically issued to the customer on the basis of the information transmitted by the enquiry device (13) at a cash desk installation (11) provided in the sample shop.
g) After the invoice has been settled and a collection card (4) issued from the cash desk installation (11) the information relating to the desired goods and their piece numbers together with information identifying the customer, which is also located on the collection card (4), is transmitted to a central computer (53) of the goods dispensing station (3) via the line (2).
h) The goods dispensing station (3) contains goods corresponding to the display samples (14) in larger piece numbers in a storage installation (31).
i) On the basis of the information given to the goods dispensing station (3) the goods the customer desires are removed from the storage installation (31) and placed into a goods dispensing installation (32).
k) After the insertion of the collection card by the customer into a reading device (34) of the goods dispensing device (32) a removal device (33) for the removal of the desired goods is displayed by a display device (35, 52).

2. A system according to Claim 1,
**characterised in that** the requestable information takes the form of bar codes (16) provided on the display samples (14) or on a place associated therewith.

3. A system according to Claim 2,
**characterised in that** the enquiry device is a scanner device (13).

4. A system according to one of Claims 1 to 3,
**characterised in that** the input device is a keypad (5) or a notebook computer.

5. A system according to one of Claims 1 to 4,
**characterised in that** the collection card (4) is a bar code or magnetic card.

6. A system according to one of Claims 1 to 5,
**characterised in that** the storage installation (31) takes the form of shelving systems in the manner of high shelves or a paternoster.

7. A system according to one of Claims 1 to 6,
**characterised in that** the goods dispensing installation (32) comprises compartments (32') for receiving the desired goods, which can be moved to a removal device (33).

8. A system according to Claim 7,
**characterised in that** the goods dispensing installation (32) is a paternoster-type installation, whose compartments (32'), which are disposed in the manner of rows and columns, can be moved to the removal device (33), which has dispensing windows (33) corresponding to the compartments disposed in a row.

9. A system according to Claim 8,
**characterised in that** the dispensing windows can be closed by openable flaps.

10. A system according to one of Claims 1 to 9,
**characterised in that** the goods dispensing station (31) has at least one information terminal (50) with a reading device (51) for the collection card (4) and a display device (52), which is connected to the central computer (53) and at the display device (52) displays at least one determined region of the goods dispensing installation (33) at which the issue of goods takes place.

11. A system according to one of Claims 1 to 10,
**characterised in that** in the sample shop (1) a computer (19) in communication with the central computer (53) via the line (2) is provided, to which information on the actually available stock of goods is continuously provided from the central computer (53),
**in that** each enquiry device (13) is in wireless communication with the computer (19) so that the customer can make debits from the actual stock of goods by the enquiry device.

## Revendications

1. Système de vente pour la vente et la livraison d'articles, présentant les caractéristiques suivantes:
a) en un premier endroit se trouve un magasin d'exposition (1).
b) en un deuxième endroit, distant du premier, se trouve un point (3) de délivrance d'articles auquel le magasin d'exposition (1) est connecté par une ligne (2) d'échange de données.
c) le magasin d'exposition (1) contient des exemplaires uniques d'articles, des photographies et/ou des descriptions de ces articles en tant qu'exemplaires d'exposition (14), des informations (16) interrogeables étant associées aux exemplaires d'exposition (14).
d) le magasin d'exposition (1) comporte pour chaque client un dispositif (13) de lecture avec un dispositif (15) d'entrée de données.
e) après avoir choisi un exemplaire d'exposition (14), le client interroge à l'aide du dispositif (13) de lecture les informations (16) qui concernent l'exemplaire d'exposition (14) et entre au niveau du dispositif d'entrée (15) la quantité souhaitée d'articles correspondant à l'exemplaire d'exposition (14).
f) à un système de caisse (11) disposé dans le magasin d'exposition, une facture est établie de manière automatique à l'attention du client sur la base des informations transmises par le dispositif de lecture (13).
g) après acquittement de la facture et édition d'une carte de retrait (4) par le dispositif de caisse (11), les informations concernant les produits désirés et la quantité sont transmises, en même temps qu'une information d'identification du client présente sur la carte de retrait (4), à un calculateur central (53) du point de délivrance des articles (3), par l'intermédiaire de la ligne (2).
h) le point de délivrance des articles (3) contient dans un système de magasin (31) des articles correspondant aux exemplaires d'exposition (14) en de plus grandes quantités.
i) sur la base des informations transmises au point de délivrance (3) des articles, les articles sont prélevés dans le système de magasin (31) et placés dans un dispositif (32) de délivrance des articles.
k) après introduction par le client de la carte de retrait dans un lecteur (34) du dispositif de délivrance des articles (32), un dispositif (33) pour le retrait des articles désirés est désigné par un dispositif d'affichage (35, 52).

2. Système selon la revendication 1, caractérisé par le fait que les informations interrogeables se présentent sous la forme de codes à barres (16) appliqués sur les exemplaires d'exposition ou en des emplacements associés auxdits articles.

3. Système selon la revendication 2, caractérisé par le fait que le dispositif de lecture est un système de scanner (13).

4. Système selon l'une des revendications 1 à 3, caractérisé par le fait que le dispositif d'entrée est un clavier (5) ou un ordinateur de type agenda (note-book).

5. Système selon l'une des revendications 1 à 4, caractérisé par le fait que la carte de retrait est une carte à code à barres ou une carte magnétique.

6. Système selon l'une des revendications 1 à 5, caractérisé par le fait que le système de magasin (31) se présente sous la forme d'un système de rayonnages de type haut ou de type pater-noster.

7. Système selon l'une des revendications 1 à 6, caractérisé par le fait que le dispositif de délivrance des articles (32) comporte des casiers (32') destinés à recevoir les articles désirés qui peuvent être amenés à un dispositif de prélèvement (33).

8. Système selon la revendication 7, caractérisé par le fait que le dispositif de délivrance des articles (32) est un dispositif de type pater-noster, dont les casiers (32') disposés en lignes ou en colonnes sont amenés au dispositif de prélèvement (33) qui présente des ouvertures (33) de délivrance associées aux casiers disposés en ligne.

9. Système selon la revendication 8, caractérisé par le fait que les ouvertures de délivrance sont fermées par des portes qui peuvent être ouvertes.

10. Système selon l'une des revendications 1 à 9, caractérisé par le fait que le point de délivrance des articles (31) comporte au moins un terminal d'informations (50) avec un lecteur (51) pour la carte de retrait (4) et un dispositif d'affichage (52), qui est relié à l'ordinateur central (53) et désigne sur le dispositif d'affichage (52) au moins une zone définie du dispositif de délivrance (33) d'articles où a lieu la délivrance des articles.

11. Système selon l'une des revendications 1 à 10, caractérisé par le fait qu'il est prévu dans le magasin d'exposition (1) un calculateur (19) qui communique avec l'ordinateur central (53) par l'intermédiaire de la ligne (2) , auquel des informations sur le stock d'articles effectivement disponible sont transmises en continu par l'ordinateur central (53), par le fait que chaque dispositif de lecture (13) communique sans fil avec le calculateur (19) de telle sorte que le client peut puiser sur le stock d'articles effectif depuis le dispositif de lecture
